## Europäisches Patentamt
## European Patent Office
## Office européen des brevets

(11) Publication number: **0 199 825 B1**

## EUROPEAN PATENT SPECIFICATION

(45) Date of publication of patent specification: **28.10.92**   (51) Int. Cl.$^5$: **B23H 9/00**, B21H 3/10

(21) Application number: **85905434.8**

(22) Date of filing: **02.11.85**

(86) International application number:
**PCT/JP85/00610**

(87) International publication number:
**WO 86/02867 (22.05.86 86/11)**

(54) **METHOD OF MANUFACTURING A SELF-DRILLING SCREW.**

(30) Priority: **05.11.84 JP 234000/84**

(43) Date of publication of application:
**05.11.86 Bulletin 86/45**

(45) Publication of the grant of the patent:
**28.10.92 Bulletin 92/44**

(84) Designated Contracting States:
**DE FR GB**

(56) References cited:
**DE-C- 3 126 355**
**JP-A-57 184 635**

**No relevant documents have been disclosed.**

(73) Proprietor: **KABUSHIKI KAISHA YAMAHIRO**
**1263, Ueharacho, Kawachinagano-shi**
**Osaka 586(JP)**

(72) Inventor: **YAMAMOTO, Fukuzo**
**Kabushikikaisha Yamahiro**
**1263, Ueharacho Kawachinagano-shi**
**Osaka 586(JP)**
Inventor: **AOYA, Yoshiaki Kubushikikaisha**
**Yamahiro**
**1263, Ueharacho Kawachinagano-shi**
**Osaka 586(JP)**
Inventor: **YAMAMOTO, Hisayoshi**
**Kabushikikaisha Yamahiro**
**1263, Ueharacho Kawachinagano-shi**
**Osaka 586(JP)**

(74) Representative: **Dipl.-Phys.Dr. Manitz**
**Dipl.-Ing., Dipl.-W.-Ing. Finsterwald Dipl.-Ing.**
**Grämkow Dipl.-Chem.Dr. Heyn Dipl.-Phys.**
**Rotermund**
**Morgan, B.Sc.(Phys.) Robert-Koch-Strasse 1**
**W-8000 München 22(DE)**

Rank Xerox (UK) Business Services

# Description

The present invention relates to a method of making a self-drilling screw wherein a wire rod is being rolled in a thread rolling die.

## TECHNICAL BACKGROUND

Today, many drills are made by means of grinding a rodlike material. Striking one of a pair of dies against another may permit the tip of many self-drilling screws to be fabricated into the drill shape.

Nevertheless, various kinds of processes have been needed in order to perform the foregoing grinding process of the material. Although the process for machining the tip of the screw into the drill-shape by means of striking a die against another may suffice fabrication of the threaded part needs another process, and a simplification of the process is recommended by the industrial circles.

From that view, the present invention provides the method of making a self-drilling screw according to claim 1. Claims 2 and 3 concern particular embodiments of the invention.

## DISCLOSURE OF THE INVENTION

The method of making the self-drilling screw according to the present invention lies in an arrangement in which an electrode (106) for electric discharge machining which is equipped with a part to undergo the electric discharge which is formed to be approximately of drill-shape by means of fabricating the groovelike uneven parts at least partially on an approximately cylindrical body (101) possessing the diameter approximately equal to that of the drilling part of the self-drilling screw to be manufactured, is ready for preparation, the electric discharge made while the electrode (106), being rotated, is being moved in parallel with the thread rolling die (201) causes a majority of uneven parts (207) and (208) for fabricating the drilling part to be formed on the thread rolling die, and such thread rolling dies are in a position to roll the workpiece such as a wire rod and the like.

Such a method allows the self-drilling screw to be made only under one process.

## BRIEF DESCRIPTION OF THE DRAWINGS

A description of the embodiment according to the present invention is made in conjunction with the accompanying drawings as follows:

Fig. 1    is an enlarged perspective view of the principal part of the die;

Fig. 2    is an enlarged perspective view of the electrode (tool);

Fig. 3    is an explanatory view of the electric discharge machining;

Fig. 4    is a plan view of the die;

Fig. 5    is an enlarged side view of the die; and

Fig. 6    is an enlarged perspective view of the self-drilling screw.

## BEST MODE FOR CARRYING OUT THE INVENTION

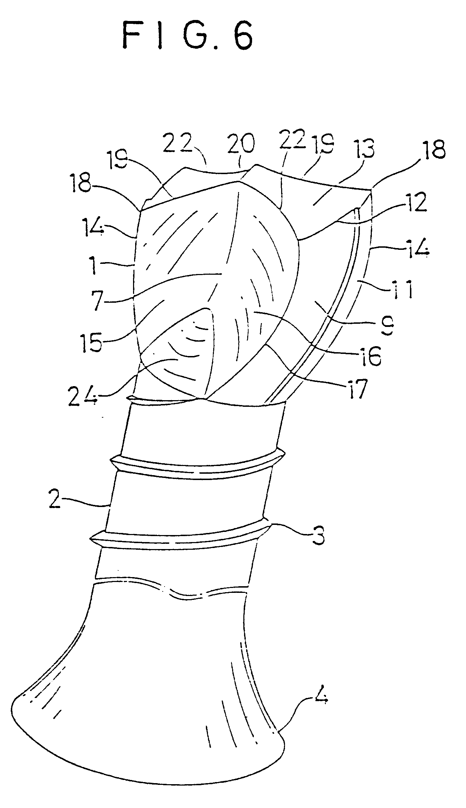

The self-drilling screw as shown in Fig. 6 is the cutting tool, the tip end of the screw of which possesses a drill-shaped cutting part (1), possesses a screw part (3) on the middle area of its shaft part (2), and is equipped with a head part (4) on another end of the shaft part. This head part (4) is held in the tool imparting a rotational torque to the screw.

This self-drilling screw is, as generally known, made by means of machining the wire rod, and when machining such a wire rod, according to the present invention, a pair of thread rolling dies enable a fabrication of the screw part (3) and the cutting part (1) to be attained only within one process. Other machining processes of the wire rod, e.g. the fabricating machining and the surface processing of the head part, employ the conventional method. Along with having the wire rod cut in the predetermined dimension, the head part is formed out, the blank waiting for the process of machining the shaft part and the cutting part of the tip end.

At that time, an option may be acceptable in which a preparatory machining of the shaft part such as tapering the tip end of the shaft end and the like is performed.

In addition to the part for machining the thread ridge of the ordinary shaft part, the foregoing thread rolling die possesses the part for machining the cutting part of the tip end. This machining of the cutting part of the tip end is performed by the electric discharge machining for which the tool (electrode) the tip end of which has the drill-shape is used. For this reason, a description is made in order of a manufacturing of the electrode, the electric discharge machining of the die and a rolling of the screw as follows:

The electrode is made by means of grinding the cylindrical electrode material into such a drill-shape as desired. A copper, a graphite, and the like may be used as the electrode material, and the present embodiment adopts particularly a copper tungsten in terms of the advantageousness for grinding.

The electrode material is ground to a cylindrical shape possessing the predetermined diameter (approximately equal to that of the cutting part (1) on the tip end of the self-drilling screw which is finally finished.) Subsequently, a method identical to that for making the drill allows a groove (102) and a land (103) of the body (101) to be ground, finally followed by grinding the tip end part (104). Under the present embodiment, a point angle and second roughing angle are set to 110° and 30°, the land (103) being also relieved. The body (101) may be entirely ground into drill-shape and further option is also acceptable in which only the part necessary for the electric discharge machining is ground into the drill-shape, whereas other part is adapted to be of the cylindrical part (105). At that time, it is acceptable to make the diameter of the cylindrical part smaller than that of the drill of the body (101).

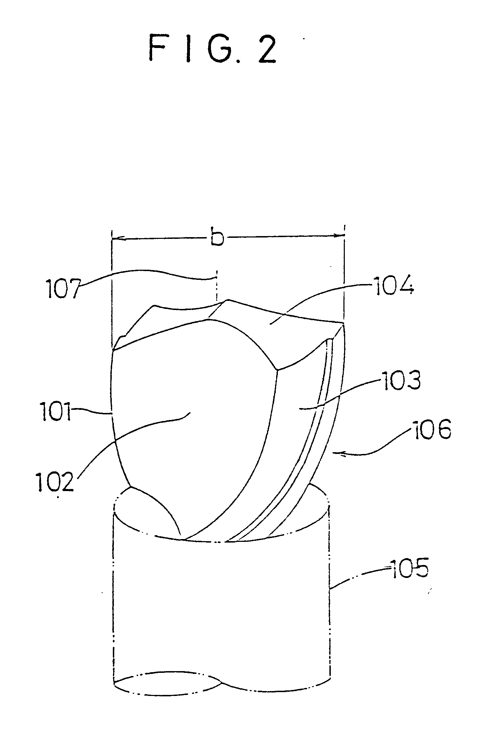

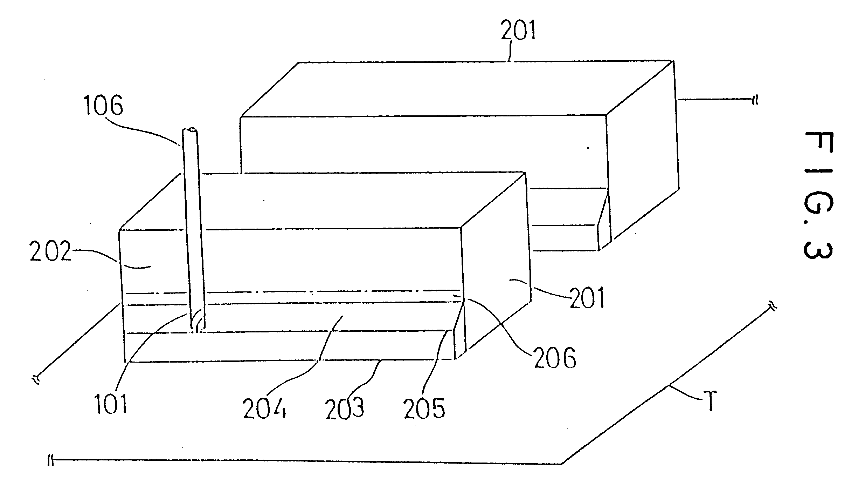

Electric discharge machining of the die (Figs. 2 and 3):

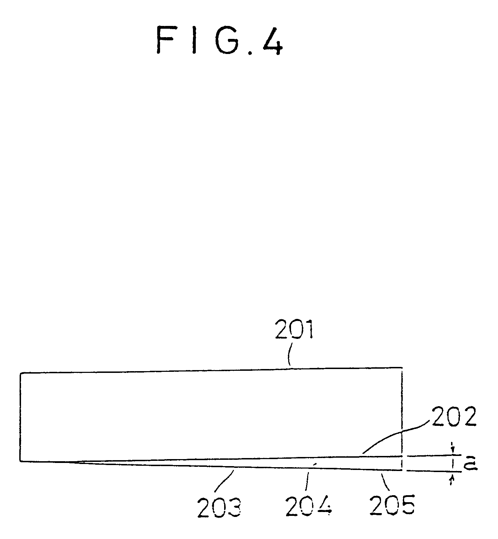

Next, the electric discharge machining of the die is performed, utilizing the foregoing tool (electrode) (106). The electrode (106) is mounted to the lower end of a servo head of an electric discharge machine. On the other hand, one set of dies (201) and (201), workpieces, are put on a work table (T). These dies cause the predetermined lead angle to have a majority of long grooves (not shown) for forming the thread ridge forced on the upper flat surface (202). These long grooves are similar to those of a flat die for rolling the ordinary thread ridge, and are formed by the same method. It is acceptable to form the long grooves after the electric discharge machining. A bank part (203) is formed projectingly from the lower part of the die (201). The bank part (203), as shown in Fig. 4, makes an angle (a) to the flat part (202) as seen in a plan view, being gradually extruded proportionally to progressing from the left of the die to the right. The angle (a) is 3° - 5°. The bank part (203) possesses an inclined surface (204) following the flat part and a top (205) of the inclined surface.

The machining for fabricating the drilling part is performed by the electrode (106) on the lower part of the flat surface (206), where no long groove is to be made, the lower part of the inclined surface (204) and the flat surface (202) being corresponding thereto. The electrode (106) is moved in parallel with the flat surface (202), while being rotated from the left of the die (201) to the right. It is self-explanatory that the electric discharge is performed by way of such a fine gap as 0.01 - 0.1 mm in dielectric liquid. A lateral moving length of the electrode made during one rotation thereof is approximately equal to the circumferential length of the drill diameter (b) of the electrode. The electric discharge machining is performed until the central axis (107) of the electrode (106) reaches the position of the top (205) in the right end of the die (201). The present embodiment tentatively adapts the gimlet angle of the foregoing inclined surface (204) to be 20°, such an angle being able to be adequately changed.

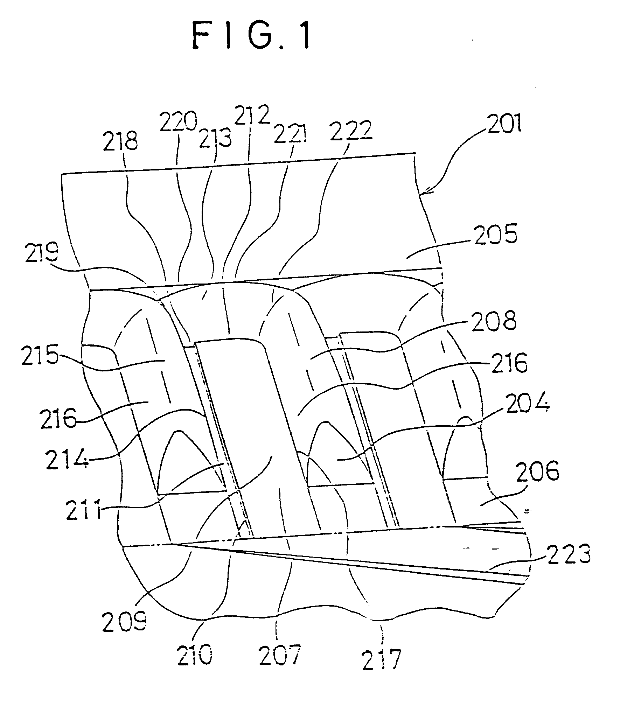

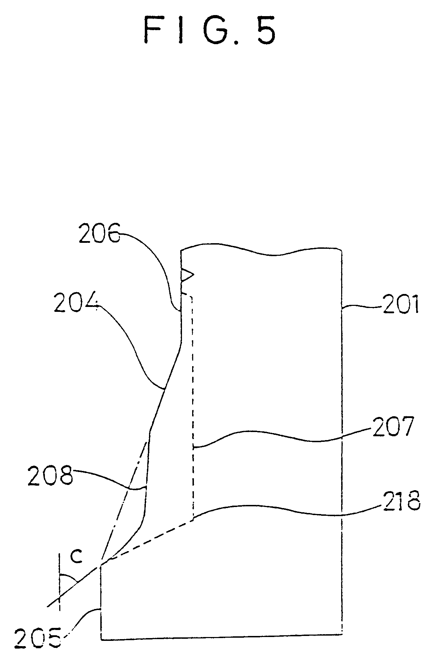

Rolling of the die and the screw (Figs. 1, 5, & 6):

Thus, a majority of uneven parts which arise when the drill-shaped electrode (106) is moved, while being rotated on the plane, are formed on the inclined surface (204) and the lower part of the flat surface (206) of the die which have been subjected to the electric discharge machining. The concave part (207) corresponds to the land (103) and the convex part (208) corresponds to the groove (102). There is no necessity of putting a definite boundary between the concave part (207) and the convex part (208), because they are relative to each other. Although since the electrode (106) is moved in parallel with the flat surface as mentioned previously, a depth of the concave part (207) into the flat surface (202) is constant between the right of the die and the left, because the bank part (203) is considerably projected proportionally to being near to the right of the die (201), the nearer to the right of the die (201), the more markedly a difference between the concave part (207) and the convex part (208) is increased.

Fig. 1 is a perspective view of the details of the concave part (207) and the convex part (208). Since this is a perspective view the viewing direction toward the inclined surface (204) and the lower part of the flat surface (206) of the die (201) of which is from the left and upper portion of the die to the right and lower portion thereof, the top (205) is drawn on the upper part of the drawing, while the lower part of the flat surface (206) is drawn on the lower portion thereof.

The concave part (207) comprises a part to form the land (209) and a part to form a margin (211) which is deeper than the former part (209) with a difference in step (210) taking place between them. In that case, there is not always a necessity of connecting both the parts (209) and (211) by way of the difference in step (210) to each other, and a depth is gradually increased proportionally to the progressing from the former part (209) to the latter part (211). Both the parts (209) and (211) are followed by way of a boundary (212) by a part to be steeply inclined up (213). The part to form the margin (211) is followed by way of a part to form the cutting edge (214) by a part to form the cutting surface (215) on the convex part (208). After the part to form the cutting surface (215) makes a gradual ascent, it is followed by a part to form a drag surface (216), subsequently making a descent. The part to form the drag surface (216) is followed by way of a boundary part against the land (217) by the part to form the land (209). Since the boundary (212) imparts the second roughing angle to the drill-shape of the cutting part (1) of the self-drilling screw which is to be rolled by the die (202), in proportion to its progressing from the part to form the margin (211) to the part to form the land (209), it makes a gradual access to the upper part of the die (201). A point of contact (218) at which three parts including the part to form the margin (211), the steeply inclined part (213), and the part to form the cutting surface (215) are intersected one to another constitutes a shoulder (18) of the cutting part of the screw. The steeply inclined part (213), approximately of fan-shape, possesses about 50° of elevating angle (c). This steeply inclined part (213), which forms the tapered part (13) of the screw's cutting part, causes its boundary line (219) against the part to form the cutting surface (215) to form a cutting edge on the tip (19). The fan edge part (220) of the steeply inclined part (213) forms a chisel point (20) of the screw's cutting part (1), and there exists a fine gap (221) between the fan edge part (20) and the top (205). The inclined part (204) is left as a blank on the upper part of the convex part (203) in the die. The more definitely the boundary parts among the parts appear as lines and points, the definite the edges of the cutting pare (1) become. This simply an adjustment of the degree to which the wire rod is pressed may meet the requirements, if necessary. For example, although since the boundary line (219) forms the cutting line on the tip (19), it is preferable that the boundary line (219) appears as a definite line, there is no necessity of that the boundary line (222) between the steeply inclined part (213) and the part to form the land (216) appears as the line. The long groove (223) constituting the screw part (3) is formed on the flat surface (202).

The die (201) employing such a construction allows the foregoing wire rod to be rolled. The method of performing the pertinent rolling is identical to that of making the screw by the common flat die.

Self-drilling screw (Fig. 6):

The afore-mentioned rolling allows the self-drilling screw as shown in Fig. 6 to be obtained.

The cutting part (1) of the screw possesses the groove (7) running spirally in a longitudinal direction, the land (9) and the margin (11). The groove (7) is formed by the convex part (208) of the die, the land (9) is formed by the part to form the land (209) of the concave part, and the margin (11) is formed by the part to form the margin of the concave part.

The cutting edge on the tip (19), the point angle of which is set to 110°, is formed on the edge of the tapered surface (13) on the tip end of the cutting part (1), and the tapered surface (13) is formed by the part to form the taper of the die. The second roughing angle of the tapered surface is about 30°, and in proportion to the progressing of the shoulder (12) of the tapered surface (13) from the margin (11) to the land (9), the shoulder (12) gets gradually far from the tip end to the base part. Such a construction is attained by the arrangement in which in proportion to the boundary (212) of the die getting far from the contact point (218) of the die, the boundary (212) is inclined such that it is directed up to the upper part of the die.

The land (9) is relieved from the margin (11). That is based on an existence of the difference in step (210) of the die. The margin (11) is followed by the cutting surface (15) of the groove (7) with the cutting edge (14) as a boundary, and the cutting surface (15), getting curved, is followed by the drag part (16). The drag part (16) is connected by way of the boundary part (17) to the land (9). The boundary line (219)of the die forms the cutting edge on the tip (19) located on the edge of the tapered surface (13) on the tip end, the boundary area (222) forms the boundary area (22) between the tapered surface (13) and the drag part (16).

The chisel point (20) is formed on the tip end of the cutting part (1). In order to form the chisel point to be of line, it is preferable that the fan-shaped part (220) draws a fine circular arc.

A projection (24), approximately taper-shaped, is formed as a connection part between the drill-shaped cutting part (1) and the shaft part (2) on the base part of the groove (7). Since the projection (24) is formed on the inclined surface (204), it possesses about 30° of taper angle. The point angle of the tapered surface (13), which is formed by the steeply inclined surface (213) having about 55° of elevating angle, becomes 110°.

The self-drilling screw having such a construction permits its drill-shaped cutting part (1) to make a prepared hole, while being screwed to the tool by the screw part (3). It is possible to change, if necessary, the drill diameter of the cutting part (1), the diameter of the shaft (2), and the diameter of the thread ridge of the screw part (3). The tip end of the thread ridge may acceptably begin with running from the inside of the cutting part (1), or it may be also acceptable that such a tip end begin with running from the position considerably distant from the cutting part (1).

In addition to making an embodiment as the foregoing self-drilling screw, the present invention may be effected also as a drill. In that case, the concave part (207) and the convex part (208) employ an irregular strip which extends in elongate manner from the lower part of the die to the upper part thereof, and are aligned in parallel with each other under the predetermined lead angle. In the afore-mentioned embodiment the number of the grooves (7) is two, and it is flexibly possible to increase such a number.

There is not always necessity of forming the bank part (203) in advance, when performing the electric discharge machining of the die, and it is acceptable to rely entirely upon the fabrication by the electric discharge machining. Furthermore, in order to clear up the shape of the die which has undergone the electric discharge machining, the grinding machining may be acceptably further performed.

The drill-shaped form to be fabricated is not always limited only to the twist-drill-shape, and a modified drill-shape may be also acceptable.

Thus, according to the present invention, at the same time when the rolling enables the drill-shaped cutting tool to be made only with one process, even the embodiment as the self-drilling screw may fabricate the cutting part and the screw part at the same time so that an effect of simplifying the manufacturing process is attained.

INDUSTRIAL APPLICABILITY

To sum up, the method and its thread rolling die according to the present invention may be applied to the manufacturing of the self-drilling screw and the like which is equipped with a cutting function on the tip end of the drill-shaped cutting tool and the screw, and enables the screw to be finished easily simply with one manufacturing process.

**Claims**

1.  A method of making a self-drilling screw wherein a wire rod is being rolled in a thread rolling die (201) characterized in that
    - the thread rolling die (201) is machined, wherein an electrode (106) for electric discharge machining (EMD) is formed, the electrode (106) comprising the part to undergo the electric discharge machining which is formed to be approximately of drill-shape by means of forming the groovelike uneven parts at least partially on a cylindrical body (101) being of a diameter approximately equal to that of the drill part of the self-drilling screw to be made, wherein the part to undergo the electric discharge of the electrode is equipped with the uneven parts which are similar to the shape of the cutting groove (7) of the drill part and the land (9) respectively of the self-drilling screw to be made and wherein the electric discharge is made while rotating the electrode (106) together with moving the same in parallel with the thread rolling die (201) to allow a majority of uneven parts (207) and (208) for forming the drill part to be formed on the thread rolling die, and
    - in that the wire rod is rolled with the thus prepared die.

2.  A method of making a self-drilling screw according to claim 1,
    characterized in that in the step of machining the thread rolling die a majority of grooves (223) for forming the thread ridge are formed on the upper part of the die, and the majority of the 3-dimensional features (207) and (208) for forming the drill part are formed on the lower part of the die.

3.  A method of making a self-drilling screw according to claim 2,
    characterized in that in the step of machining the thread rolling die the bank part (203) possessing the inclined part (204) is projectingly formed on the lower part of the thread rolling die, and the majority of the 3-dimensional features (207) and (208) for forming the drill part are formed at least on the inclined part (204).

**Patentansprüche**

1.  Verfahren zur Herstellung einer selbstschneidenden Schraube, bei dem ein Drahtstift in einer Gewindewalzform (201) gewalzt wird, dadurch gekennzeichnet, daß

    die Gewindewalzform (202) bearbeitet wird, wobei eine Elektrode (106) für Funkenerosions-Bearbeitung (electric discharge machining = EMD) ausgebildet wird, welche Elektrode (106) den Teil umfaßt, der einer Funkenerosions-Bearbeitung zu unterziehen ist, und annähernd bohrerförmig ausgebildet wird mittels mindestens teilweisen Ausbildens der nutartigen unebenen Teile an einem zylindrischen Körper (101) mit einem Durchmesser, der annähernd gleich dem des Bohrerteils der herzustellenden selbstschneidenden Schraube ist, wobei der sich der elektrischen Entladung der Elektrode zu unterziehende Teil mit unebenen Bereichen ausgestattet ist, die gleichartig zur Form der Schneidnut (7) des Bohrerteils bzw. zum Schneidsteg (9) der herzustellenden selbstschneidenden Schraube sind, und wobei die Funkenerosion durchgeführt wird unter Drehen der Elektrode (106) mit gleichzeitiger Bewegung derselben parallel zur Gewindewalzform (201), um eine Mehrzahl der unebenen Teile (207) und (208) zum Ausbilden des herzustellenden Bohrerteils an der Gewindewalzform entstehen zu lassen, und

daß der Drahtstift mit der so angefertigten Form gewalzt wird.

**2.** Verfahren zum Herstellen einer selbstschneidenden Schraube nach Anspruch 1, dadurch gekennzeichnet, daß bei dem Bearbeiten der Gewindewalzform die Mehrzahl der Nuten (223) zum Ausbilden des Gewindegangs an dem oberen Teil der Form ausgebildet werden und daß die Mehrzahl der dreidimensionalen Merkmale (207) und (208) zum Ausbilden des Bohrerteils am unteren Teil der Form ausgebildet werden.

**3.** Verfahren zum Herstellen einer selbstschneidenden Schraube nach Anspruch 2, dadurch gekennzeichnet, daß bei dem Bearbeiten der Gewindewalzform der den geneigten Teil (204) aufweisende Vorsatzteil (203) vorstehend an dem unteren Teil der Gewindewalzform ausgebildet wird und daß die Mehrzahl der dreidimensionalen Merkmale (207) und (208) zum Ausbilden des Bohrerteils mindestens an dem geneigten Teil (204) ausgebildet werden.

**Revendications**

**1.** Procédé de fabrication d'une vis autotaraudeuse dans lequel on roule une tige en forme de fil dans une matrice de roulage à filets (201), caractérisé en ce que
- la matrice de roulage à filets (201) est usinée, en ce que l'on forme une électrode (106) d'usinage par décharge électrique (EMD), l'électrode (106) comprenant la partie qui doit subir l'usinage par décharge électrique qui est formée de façon à présenter approximativement une forme de taraud, en formant les parties irrégulières semblables à des gorges au moins en partie dans un corps cylindrique (101) qui a un diamètre approximativement égal à celui de la partie en forme de taraud de la vis autotaraudeuse que l'on doit fabriquer, en ce que l'on munit la partie de l'électrode qui doit subir la décharge électrique des parties irrégulières qui ont une forme similaire à celle de la gorge de coupe (7) de la partie de taraud et du listel de la lèvre de coupe (9) respectivement de la vis autotaraudeuse à fabriquer, et en pratiquant la décharge électrique tout en faisant tourner l'électrode (106) et en déplaçant celle-ci parallèlement à la matrice de roulage à filets (201) pour permettre une majorité de parties inégales (207) et pour former la partie de taraud à former sur la matrice de roulage à filets, et
- en ce que la tige en forme de fil est roulée avec la matrice ainsi préparée.

**2.** Procédé de fabrication d'une vis autotaraudeuse selon la revendication 1, caractérisé en ce que, au cours de l'étape d'usinage de la matrice de roulage à filets, on forme une majorité de gorges destinées au formage de l'arête du filet à la partie supérieure de la matrice, et on forme sur la partie inférieure de la matrice la majorité des éléments tridimensionnels (207) et (208) pour le formage de la partie de taraud.

**3.** Procédé de fabrication d'une vis autotaraudeuse selon la revendication 2, caractérisé en ce que, au cours de l'étape d'usinage de la matrice de roulage à filets, on forme la partie de taille (203), qui possède la partie inclinée (204), en projection sur la partie inférieure de la matrice de roulage à filets, et on forme au moins sur la partie inclinée (204) la majorité des éléments tridimensionnels (207) et (208) pour le formage de la partie de taraud.

# F I G . 1

# FIG. 2

# FIG. 3

# FIG.4

# F I G. 5

# F I G. 6